# EUROPEAN PATENT SPECIFICATION

(11) **EP 3 571 332 B1**
(45) Date of publication and mention of the grant of the patent: **17.02.2021**
(21) Application number: 18705496.0
(22) Date of filing: 18.01.2018
(51) Int. Cl.: C25B 11/03, C25B 15/08, C25B 1/04

(54) **ELECTROLYTIC CELL FOR THE PRODUCTION OF H2**
ELEKTROLYSEZELLE ZUR HERSTELLUNG VON H2
CELLULE ÉLECTROLYTIQUE POUR LA PRODUCTION DE H2

(30) Priority: 18.01.2017 IT 201700004794
(43) Date of publication of application: 27.11.2019
(73) Proprietor: Capriccioli, Andrea, 00040 Rocca Priora (IT)
(72) Inventor: Capriccioli, Andrea, 00040 Rocca Priora (IT)
(74) Representative: Bosman, Cesare
(86) International application number: PCT/IB2018/050321
(87) International publication number: WO 2018/134766

(56) References cited:
- EP-A2- 1 580 303
- WO-A1-2015/118073
- CA-A- 1 143 334
- US-A- 4 263 107
- US-A- 4 442 801
- US-B1- 8 940 151

## Description

### PRIORITY CLAIM

This application claims priority from Italian Patent Application No. 102017000004794 filed on January 18, 2017.

### TECHNICAL FIELD

The present invention concerns an electrolytic cell for the production of hydrogen (H₂).

For some time now, a sector of scientific research has been focusing on the production of energy that does not entail the use of fossil fuels. This need derives both from the progressive reduction of oil reserves and from greater attention to environmental issues.

The increasingly widespread recourse to renewable energy sources has required the development of energy storage systems. Renewable energy sources are, by their inherent nature, non-programmable and their availability does not always coincide with our requirements. It is therefore necessary to try to store the energy which is sold off at low cost or which could not be produced and fed into the electrical grid. One of the most promising solutions is to use this low cost or non-generable energy to produce the first of the energy vectors: hydrogen. The storage and use of hydrogen will enable us to obtain energy when we need it.

This gas, in fact, is an energy vector able to meet energy requirements and, above all, has a very low environmental impact as it does not produce polluting substances such as carbon dioxide or greenhouse gases. The hydrogen can be exploited to obtain both thermal energy, due to combustion, and electrical energy, due to particular electrochemical devices called fuel cells. In both cases, the hydrogen binds with oxygen forming water as the only reaction product, which makes it extremely eco-compatible. Hydrogen has the further advantage that it can be produced in a non-polluting manner, using a photovoltaic cell system to produce the current necessary for dissociation of the aqueous solution by electrolysis. Lastly, hydrogen has the great advantage of being extremely lightweight and therefore of having a high energy density per unit of mass.

### BACKGROUND ART

As is known, by means of electrolysis it is possible to decompose water into gaseous oxygen and hydrogen.

In particular, at the cathode the hydrogen ions acquire electrons in a reduction reaction that leads to gaseous hydrogen, and at the anode the hydroxide ions undergo oxidation leading to the formation of gaseous oxygen.

The device in which electrolysis of the aqueous solution takes place is called electrolyzer or electrochemical cell. Usually, the electrolytic cell is composed of two half-cells, maintained separate by a semi-permeable membrane, or contained in separate containers and connected by a saline bridge. The semi-permeable membrane and the saline bridge have the function of allowing the passage of an internal ionic current necessary for ensuring that in each of the half-cells the necessary conditions are maintained for occurrence of the respective redox reaction.

In particular, the semi-permeable membrane has the purpose of maintaining the two gases produced separate from each other, while allowing the passage of ions. In fact, in the electrolysis of the aqueous solution, an electrolytic cell must be used having components able to guarantee separation of the hydrogen and oxygen produced.

As will be immediately evident to a person skilled in the art, the presence of the saline bridge or the semi-permeable membrane represents a significant cost in the global economy of the electrolytic cells. This cost derives both from the energy consumption connected with the activity of the saline bridge and from the intrinsic value of the semi-permeable membranes.

US 8 940 151 B1 discloses a water electrolyser comprising an electrolysis chamber, two perforated electrodes, and means for water solution recirculation inside the electrolysis chamber

### DISCLOSURE OF INVENTION

The object of the present invention is to provide an electrolytic cell, the technical characteristics of which are such as to guarantee both the separation from each other of the hydrogen and the oxygen produced during the electrolysis, and correct maintenance of the electrolytic solution without having to use either a saline bridge or a semi-permeable membrane.

The subject of the present invention is an electrolytic cell for the electrolysis of an aqueous solution, the essential characteristics of which are described in claim 1, and the preferred and/or auxiliary characteristics of which are described in claims 2-6.

### BRIEF DESCRIPTION OF THE DRAWINGS

An embodiment example is provided below for purely illustrative non-limiting purposes with the help of the accompanying figures, in which:
- figure 1 is a perspective view, as a whole and with parts shown in schematic form, of an electrolytic cell according to the present invention;
- figure 2 is a section along the line II-II of figure 1 with the two half-cells spaced from each other for reasons of clarity;
- figure 3 is a section along the line III-III of figure 1 with the two half-cells spaced from each other for reasons of clarity;
- figure 4 is an exploded drawing of a part of the electrolytic cell of figure 1;
- figure 5 is an enlarged view of a particular element of the electrolytic cell of figure 1.

### BEST MODE FOR CARRYING OUT THE INVENTION

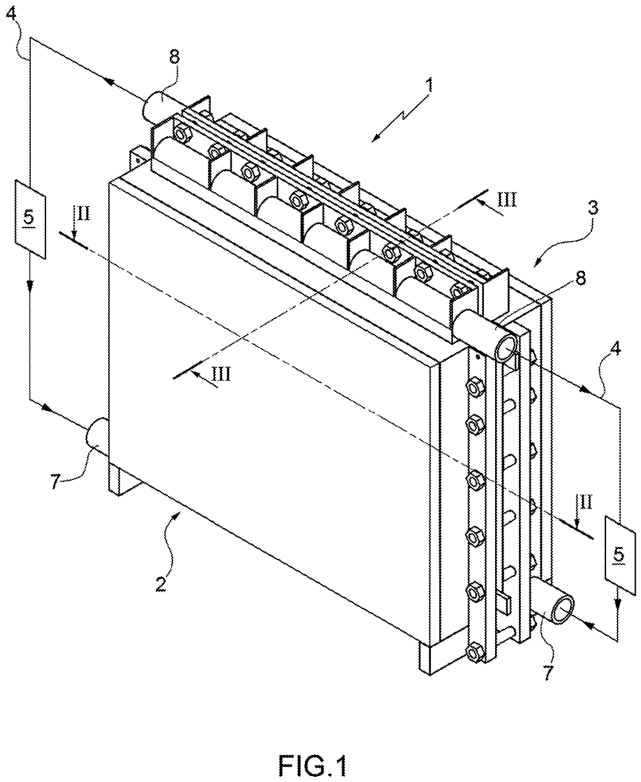

In figure 1, the number 1 indicates overall, an electrolytic cell according to the present invention. The electrolytic cell 1 is composed of two distinct units 2 and 3 coupled to each other to internally define an electrolysis chamber C in which the aqueous solution to be electrolysed is housed as will be described below, and two external recirculation circuits 4 for recirculating the aqueous solution, each of which comprises a respective degasifier 5. Both the external recirculation circuits 4 and the degasifiers 5 are illustrated in figure 1 in an extremely schematic form.

As will be described below, the electrolysis chamber C is internally divided into a plurality of compartments which are passed through by the aqueous solution during the different phases of the electrolysis process which it undergoes.

Below, the two distinct units 2 and 3 will be called half-cells to recall the technology of the electrolytic cells.

Each of the half-cells 2 and 3 comprises an inlet coupling 7 to feed the respective half-cell with the aqueous solution and an outlet coupling 8 to allow the aqueous solution and the gases produced by the respective half-cell to flow out.

As illustrated in figure 1, the external recirculation circuits 4 hydraulically connect the outlet coupling 8 of the half-cell 2 with the inlet coupling 7 of the half-cell 3, and the outlet coupling 8 of the half-cell 3 with the inlet coupling 7 of the half-cell 2. In this way, the aqueous solution which, together with the gas produced by the electrolysis, flows out of a half-cell, and is introduced into the other half-cell. The two external recirculation circuits 4 are operated by two respective pumps known and not illustrated or described for the sake of simplicity.

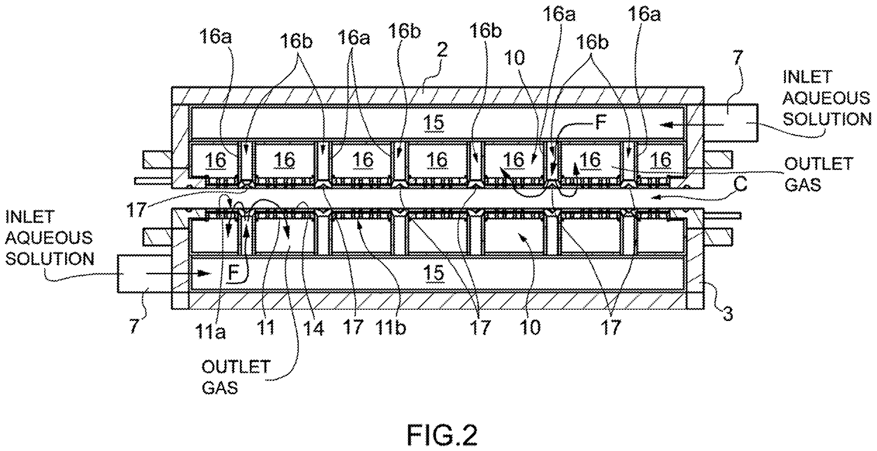

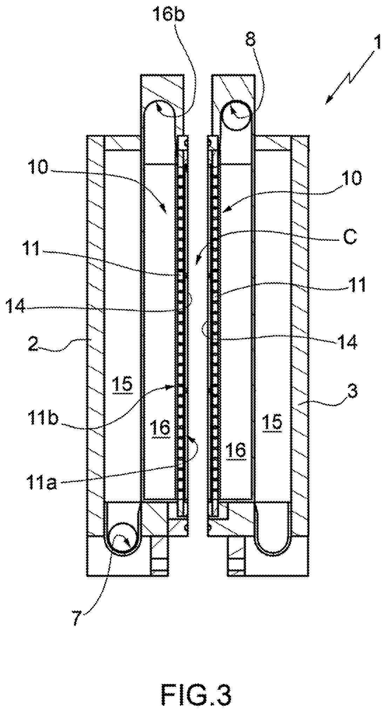

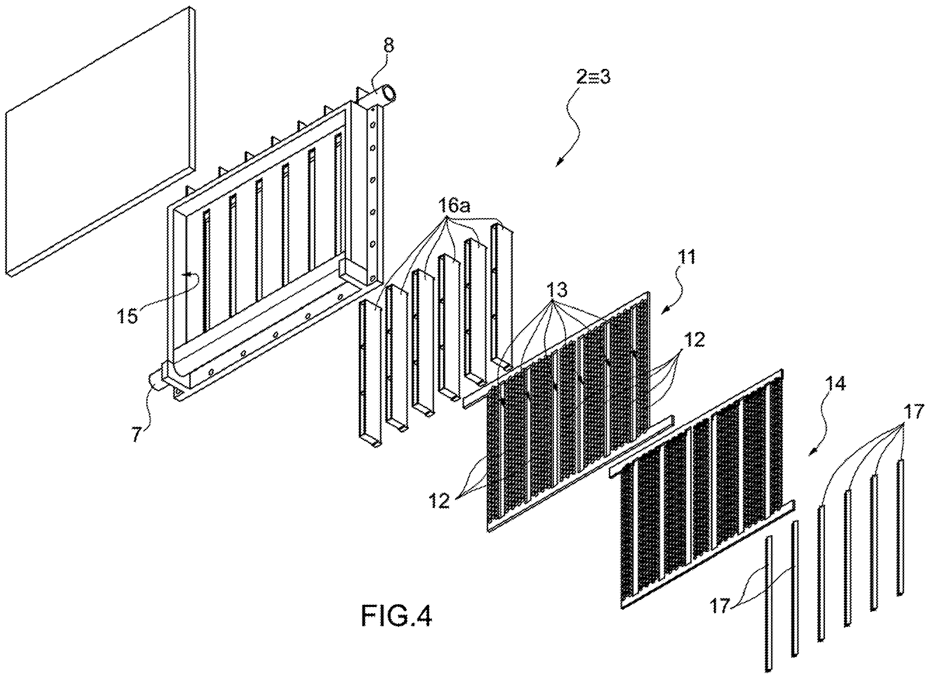

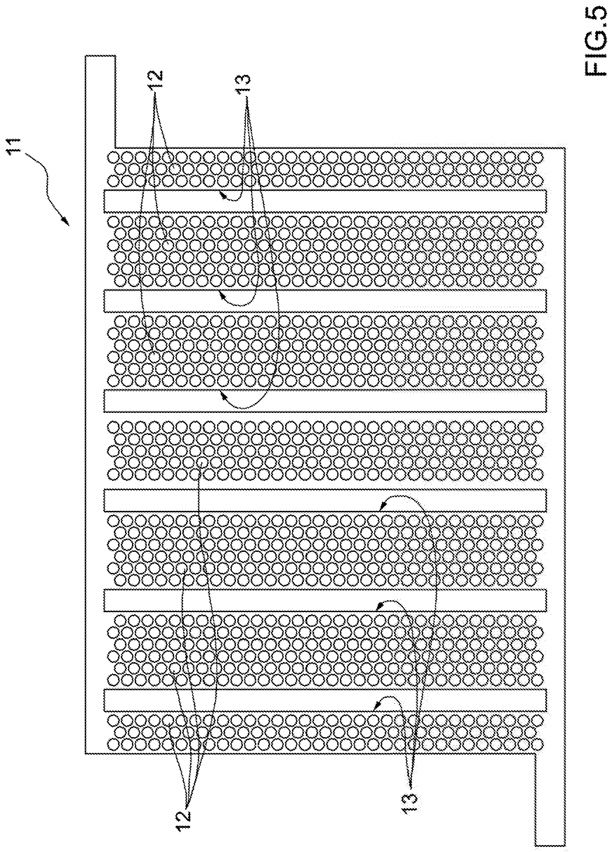

As illustrated in figures 2-4, each of the half-cells 2 or 3 comprises an electrode 10 consisting of a metal sheet 11 and an insulating layer 14 arranged to cover a front surface 11a of the metal sheet 11. As clearly illustrated in figure 5, the metal sheet 11 (like the insulating layer 14) has a plurality of perforated portions 12 and a plurality of vertical slits 13 obtained between two perforated portions 12.

Each of the half-elements 2 and 3 further comprises a feeding tank 15 and a drawing tank 16 which are coupled to a rear surface 11b of the metal sheet 11.

The feeding tank 15 is hydraulically connected to the inlet coupling 7 and to the vertical slits 13. In this way, the aqueous solution enters from the inlet coupling 7, is distributed in the feeding tank 15 and then crosses the metal sheet 11 through the vertical slits 13.

The drawing tank 16 is hydraulically connected to the perforated portions 12 and to the outlet coupling. In this way, the aqueous solution that passes through the perforated portions 12 is distributed in the drawing tank 16 and then flows out of it through the outlet coupling 8.

Each of the half-cells 2 and 3 comprises a plurality of hollow partitions 16a made of insulating material. The partitions 16a divide the drawing tank 16 into a plurality of compartments, each of which is hydraulically connected both to a respective perforated portion 12 and to one single conveying pipe which terminates in the outlet coupling 8.

Each of the partitions 16a faces onto the feeding tank 15 and, being hollow, provides an electrically insulated hydraulic connection 16b between said feeding tank 15 and the vertical slits 13.

Each of the half-cells 2 and 3 further comprises flow deflectors 17 arranged opposite the vertical slits 13 on the front surface 11a of the metal sheet 11.

In this way, the aqueous solution, once it has crossed a vertical slit 13, spills onto the perforated portions 12 arranged at the sides of said vertical slit 13.

In use, as illustrated in figure 2 by the arrows F, the aqueous solution enters from the inlet coupling 7, is distributed in the feeding tank 15, then runs through the hydraulic connections 16b and therefore flows out of the vertical slits 13. Once the aqueous solution has flowed out of the vertical slits 13, it encounters the flow deflectors 17 which deflect it against the front surface 11a at the perforated portions 12. In this way, the aqueous solution is pushed through the metal sheet 11 for a second time: the first time it passes through the vertical slits 13, the second time (in the opposite direction) it passes through the perforated portions 12. As it passes through the holes of the perforated portions 12, the aqueous solution will undergo the electrolysis process since the metal sheet 11 is connected to a voltage generator. The electrolysis of the aqueous solution takes place exclusively during the second crossing of the sheet 11 through the holes of the perforated portions 12, since the first crossing of the sheet 11 takes place through the vertical slits 13 which are protected by the electrically insulated hydraulic connections 16b while the front surface 11a is covered by the insulating layer 14.

In other words, the partitions 16a and the insulating layer 14 ensure that the aqueous solution coming from the drawing tank 15, before crossing the sheet 11 for the second time, cannot come into contact with any electrically conducting surface.

The aqueous solution and the gas produced by the electrolysis then pass through the respective compartments of the drawing tank 16 and spill into the conveying pipe. From the conveying pipe the aqueous solution and the gas produced cross the outlet coupling 8 and pass into the external recirculation circuit 4 where they are separated by the respective degasifier 5. While the gas produced is collected, the aqueous solution continues in the external recirculation circuit 4 in order to be introduced into the feeding tank 15 of the other half-cell through the inlet coupling 7.

Unlike what is described above, the metal sheet 11, in place of the perforated portions 12, can comprise equivalent plate portions consisting of a plurality of small plates parallel to one another, the upper and lower extended surfaces of which constitute the active electrolysis surfaces. In this case, each of the plate portions will be located beside a vertical slit 13, so that the aqueous solution that flows out of the vertical slit 13 will be deflected by the relative flow deflector 17 towards said plate portion. The aqueous solution will therefore be pushed through the metal sheet backwards at the plate portion and, during the crossing, will undergo the electrolysis process carried out by the active surfaces (upper and lower extended surfaces) of the plates.

As appears evident from the above description, the electrolytic cell of the present invention does not require either a saline bridge or a semi-permeable membrane, with all the ensuing economic advantages.

In fact, the continuous recirculation of the aqueous solution and the fact that the electrolysis takes place only during the second crossing of the electrodes ensure an automatic separation of the two gases produced during the electrolysis and, at the same time, guarantee passage of the ions between the two half-cells. It is important to reiterate that the two gases produced during the electrolysis cannot mix together, since, after being produced exclusively inside the holes of the respective metal sheet 11, each one is pushed into a respective drawing tank 16 to be then treated by the respective degasifier 5. The above entails the important advantage of not requiring a partition between the two electrodes in the electrolysis cell.

To summarize, the electrodes of the electrolytic cell of the present invention comprise a plurality of openings, the lateral walls of which define the only active electrolysis surface. Consequently, the aqueous solution will be electrolysed exclusively during the continuous passage through these openings.

## Claims

1. An electrolytic cell (1) for the electrolysis of an aqueous solution comprising two half-cells (2, 3) each of which comprises a respective electrode (10) which consists of a metal sheet (11) connected to a voltage generator and housed in an electrolysis chamber (C) defined between the two half-cells (2, 3), and means (4) for continuous recirculation of the aqueous solution inside said electrolysis chamber (C); each of said half-cells (2, 3) comprising a feeding tank (15) onto which a rear surface (11b) of said metal sheet (11) faces and, in use, crossed by an aqueous solution to be electrolysed, and a drawing tank (16), in use crossed by an aqueous solution which has already undergone electrolysis; in each of said metal sheets a plurality of first openings (12) is obtained having lateral walls defining unique active electrolysis surfaces and facing onto said drawing tank (16) and a plurality of vertical slits (13) adapted to allow the aqueous solution to be electrolysed to pass through the metal sheets (11); **said electrolytic cell being characterized in that** each of said half-cells comprises (a) a plurality of hydraulic connections (16b) made of electrical insulating material and arranged to establish respective electrically insulated hydraulic connections between said feeding tank (15) and said vertical slits (13); (b) an electrical insulating layer (14) arranged to cover a front surface (11a) of said metal sheet (11) facing towards the other electrode (10); and (c) a plurality of flow deflectors (17) arranged opposite the vertical slits (13) on the front surface (11a) of the metal sheet (11) to deflect the aqueous solution to be electrolysed coming out of the vertical slits (13) towards said first openings (12) to allow a second passage through the metal sheet (11).

2. The electrolytic cell (1) for the electrolysis of an aqueous solution according to claim 1, **characterized in that** said first openings are holes (12).

3. The electrolytic cell (1) for the electrolysis of an aqueous solution according to claim 1, **characterized in that** said first openings are made by means of a plurality of small plates parallel to one another.

4. The electrolytic cell (1) for the electrolysis of an aqueous solution according to one of the preceding claims, **characterized in that** it comprises a plurality of hollow partitions (16a) made of electrical insulating material and housed inside said drawing tank (16) and each of which define, inside it, a respective hydraulic connection (16b).

5. The electrolytic cell (1) for the electrolysis of an aqueous solution according to one of the preceding claims, **characterized in that** it comprises two external recirculation circuits (3) each of which hydraulically connects a drawing tank (16) of a half-cell (2, 3) to the feeding tank (15) of the other half-cell (3, 2).

6. The electrolytic cell (1) for the electrolysis of an aqueous solution according to claim 5, **characterized in that** it comprises two degasifiers (5), each of which is comprised in a respective external recirculation circuit (4).

## Patentansprüche

1. Elektrolysezelle (1) für die Elektrolyse einer wässrigen Lösung, umfassend zwei Halbzellen (2, 3), von denen jede eine jeweilige Elektrode (10) umfasst, die aus einem Metallblech (11) besteht, die mit einem Spannungsgenerator verbunden und in einer Elektrolysekammer (C) zwischen den beiden Halbzellen (2, 3) angeordnet ist, und Mittel (4) zur kontinuierlichen Rezirkulation der wässrigen Lösung innerhalb der Elektrolysekammer (C); wobei jede der Halbzellen (2, 3) einen Zuführbehälter (15) umfasst, dem eine Rückseite (11b) des Metallblechs (11) zugewandt ist, und der im Gebrauch von einer zu elektrolysierenden wässrigen Lösung durchquert wird, und einen Ziehbehälter (16), der im Gebrauch von einer wässrigen Lösung durchquert wird, die bereits einer Elektrolyse unterzogen wurde; wobei in jedem der Metallbleche mehrere erste Öffnungen (12) mit Seitenwänden, die besondere aktive Elektrolyseflächen definieren und dem Ziehbehälter (16) zugewandt sind, und mehrere vertikale Schlitze (13) enthalten sind, die geeignet sind, der zu elektrolysierenden wässrigen Lösung den Durchgang durch die Metallbleche (11) zu ermöglichen; wobei die Elektrolysezelle **dadurch gekennzeichnet ist, dass** jede der Halbzellen umfasst: (a) mehrere hydraulische Verbindungen (16b), die aus elektrisch isolierendem Material hergestellt und angeordnet sind, um jeweilige elektrisch isolierende hydraulische Verbindungen zwischen dem Zuführbehälter (15) und den vertikalen Schlitzen (13) aufzubauen; (b) eine elektrisch isolierende Schicht (14), die so angeordnet ist, dass sie eine Vorderseite (11a) des Metallblechs (11) bedeckt, die der anderen Elektrode (10) zugewandt ist; und (c) mehrere Strömungablenker (17), die gegenüberliegend der vertikalen Schlitze (13) auf der Vorderseite (11a) des Metallblechs (11) angeordnet sind, um die aus den vertikalen Schlitzen (13) austretende zu elektrolysierende wässrige Lösung in Richtung der ersten Öffnungen (12) abzulenken, um einen zweiten Durchgang durch das Metallblech (11) zu ermöglichen.

2. Elektrolysezelle (1) für die Elektrolyse einer wässrigen Lösung nach Anspruch 1, **dadurch gekennzeichnet, dass** die ersten Öffnungen Löcher sind (12).

3. Elektrolysezelle (1) für die Elektrolyse einer wässrigen Lösung nach Anspruch 1, **dadurch gekennzeichnet, dass** die ersten Öffnungen mittels mehrerer zueinander paralleler Plättchen gebildet sind.

4. Elektrolysezelle (1) für die Elektrolyse einer wässrigen Lösung nach einem der vorhergehenden Ansprüche, **dadurch gekennzeichnet, dass** sie mehrere hohle Trennwände (16a) umfasst, die aus elektrisch isolierendem Material hergestellt und innerhalb des Ziehbehälters (16) angeordnet sind, und von denen jede in ihrem Inneren eine jeweilige hydraulische Verbindung (16b) definiert.

5. Elektrolysezelle (1) für die Elektrolyse einer wässrigen Lösung nach einem der vorhergehenden Ansprüche, **dadurch gekennzeichnet, dass** sie zwei externe Rezirkulationskreisläufe (3) umfasst, von denen jeder einen Ziehbehälter (16) einer Halbzelle (2, 3) hydraulisch mit dem Zuführbehälter (15) der anderen Halbzelle (3, 2) verbindet.

6. Elektrolysezelle (1) für die Elektrolyse einer wässrigen Lösung nach Anspruch 5, **dadurch gekennzeichnet, dass** sie zwei Entgaser (5) umfasst, von denen jeder in einem jeweiligen externen Rückführungskreislauf (4) enthalten ist.

## Revendications

1. Cellule électrolytique (1) pour l'électrolyse d'une solution aqueuse comprenant deux demi-cellules (2, 3) dont chacune comprend une électrode respective (10) qui est constituée d'une tôle métallique (11) reliée à un générateur de tension et logée dans une chambre d'électrolyse (C) définie entre les deux demi-cellules (2, 3), et des moyens (4) pour la remise en circulation en continu de la solution aqueuse à l'intérieur de ladite chambre d'électrolyse (C) ; chacune desdites demi-cellules (2, 3) comprenant un réservoir d'alimentation (15), auquel une surface arrière (11b) de ladite tôle métallique (11) fait face et, en utilisation, parcouru par une solution aqueuse devant être électrolysée, et un réservoir d'extraction (16), parcouru en utilisation par une solution aqueuse qui a déjà subi une électrolyse ; dans chacune desdites tôles métalliques, une pluralité de premières ouvertures (12) est réalisée, ayant des parois latérales définissant des surfaces d'électrolyse actives uniques et faisant face audit réservoir d'extraction (16), et une pluralité de fentes verticales (13) adaptées pour permettre à la solution aqueuse devant être électrolysée de traverser les tôles métalliques (11) ; ladite cellule électrolytique étant **caractérisée en ce que** chacune desdites demi-cellules comprend (a) une pluralité de liaisons hydrauliques (16b) constituées de matériau isolant électrique et agencées pour établir des liaisons hydrauliques électriquement isolées respectives entre ledit réservoir d'alimentation (15) et lesdites fentes verticales (13) ; (b) une couche isolante électrique (14) agencée pour recouvrir une surface avant (11a) de ladite tôle métallique (11) faisant face à l'autre électrode (10) ; et (c) une pluralité de déviateurs d'écoulement (17) agencés à l'opposé des fentes verticales (13) sur la surface avant (11a) de la tôle métallique (11) pour dévier la solution aqueuse devant être électrolysée sortant des fentes verticales (13) vers lesdites premières ouvertures (12) pour permettre un deuxième passage à travers la tôle métallique (11).

2. Cellule électrolytique (1) pour l'électrolyse d'une solution aqueuse selon la revendication 1, **caractérisée en ce que** lesdites premières ouvertures sont des trous (12).

3. Cellule électrolytique (1) pour l'électrolyse d'une solution aqueuse selon la revendication 1, **caractérisée en ce que** lesdites premières ouvertures sont constituées au moyen d'une pluralité de petites plaques parallèles les unes aux autres.

4. Cellule électrolytique (1) pour l'électrolyse d'une solution aqueuse selon l'une des revendications précédentes, **caractérisée en ce qu'**elle comprend une pluralité de cloisons creuses (16a) constituées de matériau isolant électrique et logées à l'intérieur dudit réservoir d'extraction (16) et dont chacune délimite, à l'intérieur de celle-ci, une liaison hydraulique respective (16b).

5. Cellule électrolytique (1) pour l'électrolyse d'une solution aqueuse selon l'une des revendications précédentes, **caractérisée en ce qu'**elle comprend deux circuits de remise en circulation externes (3), dont chacun relie hydrauliquement un réservoir d'extraction (16) d'une demi-cellule (2, 3) au réservoir d'alimentation (15) de l'autre demi-cellule (3, 2).

6. Cellule électrolytique (1) pour l'électrolyse d'une solution aqueuse selon la revendication 5, **caractérisée en ce qu'**elle comprend deux dégazeurs (5), dont chacun est compris dans un circuit de remise en circulation externe respectif (4).
